# EUROPÄISCHE PATENTSCHRIFT

(11) **EP 0 726 411 B1**
(45) Veröffentlichungstag und Bekanntmachung des Hinweises auf die Patenterteilung: **12.04.2000**
(21) Anmeldenummer: 96100751.5
(22) Anmeldetag: 19.01.1996
(51) Int. Cl.: F16H 57/04, F16N 29/02

(54) **Verfahren zum dosierten Schmieren eines Kettentriebes**
Method for the metered lubrication of chain drives
Procédé de lubrification dosée pour entraînements à chaînes

(30) Priorität: 07.02.1995 DE 19503861
(43) Veröffentlichungstag der Anmeldung: 14.08.1996
(73) Patentinhaber: perma-tec GmbH & Co. KG, 97717 Euerdorf (DE)
(72) Erfinder: Graf, Walter, Dipl.-Ing., D-97717 Euerdorf (DE); Immisch, Ulrich, Dipl.-Chem., D-97688 Bad Kissingen (DE); May, Anton, Dipl.-Ing. (FH), D-97705 Burkardroth (DE)
(74) Vertreter: Honke, Manfred, Dr.-Ing.

(56) Entgegenhaltungen:
- EP-A- 0 205 905
- WO-A-93/23698
- DE-A- 3 800 539
- DE-A- 4 406 099
- DE-B- 2 502 804

## Beschreibung

Die Erfindung betrifft ein Verfahren zum dosierten Schmieren eines Kettentriebes, der zumindest ein Kettenrad aufweist, mit Hilfe eines Apparates für die impulsdosierte Abgabe eines Schmiermittelfluids, welcher Apparat ein Impulsdosiersystem mit Steuereinrichtung aufweist, entsprechend den im Oberbegriff von Anspruch 1 bzw. 2 aufgeführten Maßnahmen, wie sie aus der EP-A-205 905 bekannt sind. Das Schmiermittel mag eine temperaturabhängige Viskosität von 0,4 bis 20.000 cps besitzen. - Die Impulse einer Impulsdosierung bestehen aus Mengenstromelementen, die pro Impuls ein bestimmtes Volumen aufweisen. Sie können mit konstanter Impulszeit oder mit variabler Impulszeit abgegeben werden, zum Beispiel mit einer Impulszeit, die sich nach Maßgabe der Viskosität des Schmiermittelfluids ändert.

Apparate für die impulsdosierte Abgabe eines Schmiermittelfluids sind in verschiedenen Ausführungsformen bekannt (vgl. zum Beispiel DE 42 41 073 C1 und die darin zitierte Literatur). Die Steuereinrichtung für das Impulsdosiersystem arbeitet zeitabhängig oder in Abhängigkeit von Parametern, die Betriebszustände der Maschine beschreiben, der der Kettentrieb angehört, oder auch Betriebszustände des Kettentriebes selbst beschreiben. Damit die Schmierung wirksam ist, muß die abgestimmte Schmierstoffmenge in den Kettentrieb eingespeist werden, in dem Kettentrieb ausreichend lange schmiermittelwirksam verbleiben und nach Maßgabe des "Verbrauchs" nachgespeist werden. Das bereitet Schwierigkeiten, wenn die Geschwindigkeit des Kettentriebs sich betriebsmäßig verändert. Das ist bei vielen Anwendungen von Kettentrieben in der industriellen Praxis der Fall. Das ist zum Beispiel insbesondere bei Motorrad-Kettentrieben der Fall, wenn und weil ein Motorrad im Geschwindigkeitsbereich von wenigen km/h bis zu 200 km/h und mehr betrieben wird.

Der Erfindung liegt das technische Problem zugrunde, ein Verfahren zum dosierten Schmieren eines Kettentriebes anzugeben, welches eine ausreichende wohldosierte und dadurch störungsfreie Schmierung eines Kettentriebes auch dann sicherstellt, wenn der Kettentrieb mit sehr unterschiedlichen Geschwindigkeiten betrieben wird.

Eine Lösung dieses technischen Problems ist gegeben durch ein Verfahren zum dosierten Schmieren eines Kettentriebes, der zumindest ein Kettenrad aufweist, mit Hilfe eines Apparates für die impulsdosierte Abgabe eines Schmiermittelfluids, welcher Apparat ein Impulsdosiersystem mit Steuereinrichtung aufweist, mit den Merkmalen
1.1) Das Schmiermittelfluid wird auf die Kette und/oder auf das Kettenrad aufgegeben,
1.2) die Anzahl der Umdrehungen des Kettentriebes pro Sekunde wird gemessen und einem Rechner zugeführt, der auf die Steuereinrichtung für das Impulsdosiersystem arbeitet,
1.3) der Rechner gibt das Impulsdosiersystem nach Maßgabe einer vorgegebenen Anzahl von Umdrehungen frei,
1.4) der Rechner blockiert das Impulsdosiersystem, wenn die aus der Anzahl n der Umdrehungen des Kettenrades pro Sekunde von dem Rechner abgeleitete, der Zentrifugalkraft am Kettenrad proportionale Größe einen oberen Grenzwert erreicht,
wobei der Grenzwert so gewählt wird, daß das Kettenrad in bezug auf das dosiert aufgegebene Schmiermittelfluid ababschleuderfrei arbeitet.

Die Erfindung geht von der Erkenntnis aus, daß eine Voraussetzung für die störungsfreie Schmierung eines Kettentriebes darin besteht, das Schmiermittel so aufzugeben, daß es voll wirksam wird. Das wird durch das Merkmal 1.1) erreicht, wenn darauf geachtet wird, daß das Schmiermittel nicht schon bei der Aufgabe abläuft. Das Merkmal 1.1) definiert so eine notwendige Bedingung für die Lösung des angegebenen technischen Problems. Diese Bedingung ist jedoch nicht ausreichend, es muß zusätzlich dafür gesorgt werden, daß das rotierende und damit Zentrifugalkräfte entwickelnde Kettenrad die dosierte Schmiermittelmenge nicht ganz oder teilweise abschleudert. Das erreicht die Erfindung durch die meßtechnischen und steuerungstechnischen Maßnahmen der Merkmale 1.2) bis 1.4), wenn der obere Grenzwert, proportional der Zentrifugalkraft, so gewählt wird, daß das Kettenrad in bezug auf das dosiert aufgegebene Schmiermittelfluid abschleuderfrei arbeitet. Auf diese Weise wird von selbst auch die Viskosität des Schmiermittelfluids berücksichtigt.

Da zwischen der Winkelgeschwindigkeit des Kettenrades einerseits und der Anzahl der Umdrehungen n pro Sekunde andererseits eine eindeutige Beziehung besteht, hat das technische Problem auch eine Lösung, die aus der schon angegebenen Lösung abgeleitet ist. Die abgeleitete Lösung ist gegeben durch ein Verfahren zum dosierten Schmieren eines Kettentriebes, der zumindest ein Kettenrad aufweist, mit Hilfe eines Apparates für die impulsdosierte Abgabe eines Schmiermittelfluids, welcher Apparat ein Impulsdosiersystem mit Steuereinrichtung aufweist, mit den Merkmalen:
2.1) Das Schmiermittel wird auf die Kette und/oder auf das Kettenrad aufgegeben,
2.2) die Winkelgeschwindigkeit des Kettenrades sowie die Anzahl der Umdrehungen des Kettenrades werden gemessen,
2.3) die Meßwerte für die Winkelgeschwindigkeit und für die Anzahl der Umdrehungen des Kettenrades werden einem Rechner zugeführt, der auf die Steuereinrichtung für das Impulsdosiersystem arbeitet,
2.4) der Rechner gibt das Impulsdosiersystem nach Maßgabe einer vorgegebenen Anzahl von Umdrehungen frei,
2.5) der Rechner blockiert das Impulsdosiersystem wenn die Meßwerte für die Winkelgeschwindigkeit einen oberen Grenzwert erreichen,
wobei der Grenzwert so gewählt wird, daß das Kettenrad in bezug auf das dosiert aufgegebene Schmiermittelfluid abschleuderfrei arbeitet. Die Anzahl der Umdrehungen ist programmierbar.

Bei beiden Lösungen werden nach bevorzugter Ausführungsform der Erfindung über die Programmierung des Rechners die gemäß Merkmal 1.4) bzw. 2.5) blockierten Dosiermittelimpulse nachgespeist, wenn der Kettentrieb nach der Blockierung des Impulsdosiersystems unter dem Grenzwert arbeitet. Nach bevorzugter Ausführungsform der Erfindung arbeitet der Apparat für die impulsdosierte Abgabe des Schmiermittelfluids mit volumenkonstanten Impulsen. Diese sind unschwer erreichbar, z. B. indem die Dosierung mit Hilfe einer Kolbenpumpe und Kolbenhüben durchgeführt wird. Dabei besteht die Möglichkeit, nach der vorgegebenen Anzahl von Umdrehungen eine Mehrzahl von Schmiermittelimpulsen abzugeben. Man kann auch mit zeitgesteuerten Impulsen arbeiten und dann die Impulsdauer variieren, und zwar beispielsweise nach Maßgabe der Viskosität des Schmiermittelfluids temperaturabhängig. Der Rechner muß entsprechend programmiert werden. Eine Temperaturmessung muß zusätzlich durchgeführt werden. Im allgemeinen wird man bei einer Vorrichtung für die Durchführung des erfindungsgemäßen Verfahrens die Programmierung bereits bei der Herstellung oder Einrichtung der Vorrichtung durchführen. Stets kann betriebsmäßig das in Zeiteinheit abzugebende Volumen des Schmiermittelfluids beeinflußt werden, und zwar durch Einstellung der Größe der Mengenstromelemente und/oder der Impulszeit.

Bei Einführung des erfindungsgemäßen Verfahrens in die Praxis und bei der Verwirklichung des erfindungsgemäßen Verfahrens in der Praxis kann der im Zusammenhang mit dem Patentanspruch 1 bzw. dem Patentanspruch 2 angegebene Grenzwert, der sicherstellt, daß das dosiert aufgegebene Schmiermittelfluid im Kettenrad nicht abgeschleudert wird, am Kettentrieb oder an einem Modell des Kettentriebes leicht experimentell ermittelt werden. Er ist viskositätsabhängig und bei Schmiermittelfluiden unterschiedlicher Viskosität schmiermittelabhängig. Die Viskosität ihrerseits ist, wie bereits betont, temperaturabhängig. Im allgemeinen reicht es aus, den Grenzwert für eine mittlere Viskosität eines bestimmten Schmiermittelfluids einzustellen, die das Schmiermittel in dem Temperaturbereich hat, in dem die Apparatur für die Impulsdosierung des Schmiermittelfluids arbeitet. Man kann aber die in Merkmal 1.4) bzw. 2.5) angegebenen Grenzwerte auch nach Maßgabe der im Arbeitstemperaturbereich niedrigsten Viskosität des Schmiermittelfluids einstellen. Im Rahmen der Erfindung liegt es, die Temperatur des Schmiermittelfluids, des Apparates, des Kettentriebes oder, zum Beispiel bei Motorrädern, lediglich die Außentemperatur zu messen, diese dem Rechner zuzuführen und mit dem Rechner einen diese Temperatur berücksichtigenden Grenzwert einzustellen. Die im Merkmal 1.4) erscheinende Zentrifugalkraft läßt sich mit einem temperaturabhängigen Faktor versehen, der die Temperaturänderung der Viskosität berücksichtigt.

Im einzelnen bestehen im Rahmen der Erfindung mehrere Möglichkeiten zur weiteren Ausgestaltung des erfindungsgemäßen Verfahrens. Nach bevorzugter Ausführungsform der Erfindung werden über die Programmierung des Rechners die gemäß Merkmal 1.4) bzw. 2.5) blockierten Dosierimpulse nachgespeist, wenn das Kettenrad nach der Blockierung des Impulsdosiersystems in einem Bereich unterhalb des Grenzwertes arbeitet. Nach bevorzugter Ausführungsform der Erfindung arbeitet der Apparat für die impulsdosierte Abgabe des Schmiermittelfluids mit volumenkonstanten Impulsen. Im allgemeinen wird man den Rechner nach Maßgabe eines aus einer Gruppe von Schmiermittelfluiden unterschiedlicher Viskosität und/oder unterschiedlicher Temperaturabhängigkeit der Viskosität ausgewählten Schmiermittelfluids programmieren, was experimentell leicht ermittelt werden kann.

Im folgenden wird die Erfindung anhand einer lediglich ein Ausführungsbeispiel darstellenden Zeichnung ausführlicher erläutert. Es zeigen
- Fig. 1: das Schema eines für das erfindungsgemäße Verfahren eingerichteten Kettentriebes mit Apparat für eine impulsdosierte Schmierung,
- Fig. 2: mit den Teilfiguren 2a, 2b eine graphische Darstellung, die das erfindungsgemäße Verfahren erläutert.

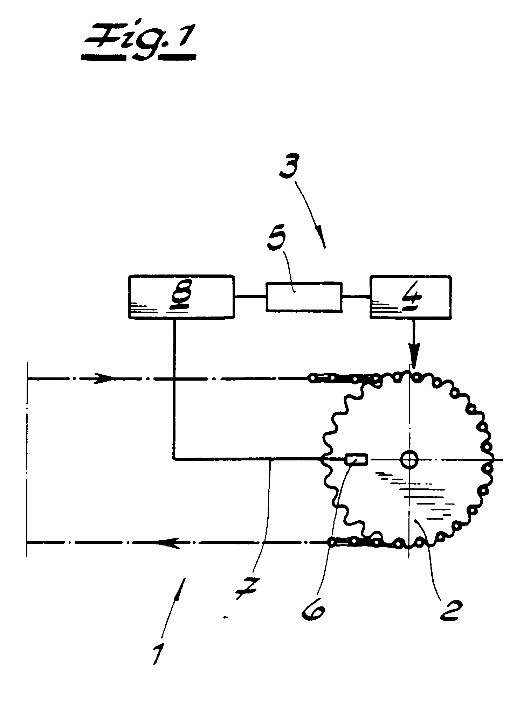

In der Fig. 1 erkennt man ausschnittsweise einen Kettentrieb 1 der ein Kettenrad 2 aufweist. Zugeordnet ist dem Kettentrieb 1 ein Apparat 3 für die impulsdosierte Abgabe eines Schmiermittelfluids, welcher Apparat 3 ein Impulsdosiersystem 4 mit Steuereinrichtung 5 besitzt.

Man entnimmt aus der Fig. 1 zunächst, daß im Ausführungsbeispiel das Schmiermittel im Auflaufbereich der Kette auf das Kettenrad aufgegeben wird. Das Kettenrad besitzt einen Drehzahlabnehmer 6 und/oder Winkelgeschwindigkeitsabnehmer. Die Meßwerte werden über eine Meßwertübertragungsleitung 7 dem Rechner 8 zugeführt, der auf die schon erwähnte Steuereinrichtung 5 arbeitet, die ihrerseits die impulsdosierte Abgabe des Schmiermittelfluids steuert.

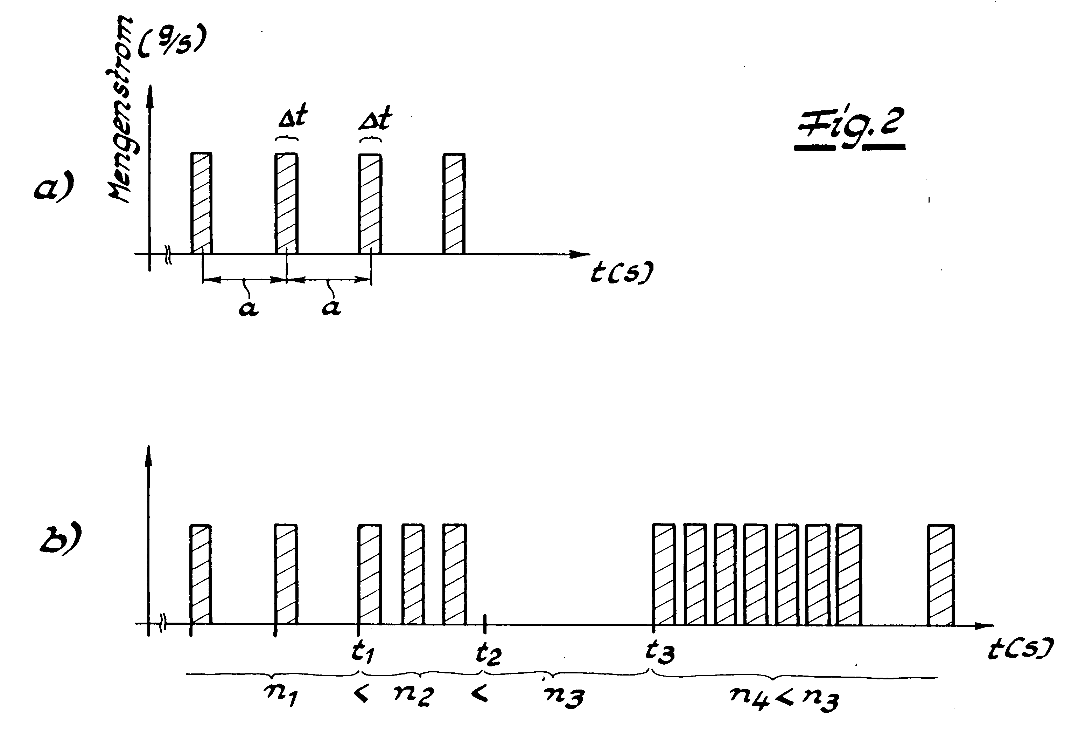

In der Fig. 2 mit den Teilfiguren a und b erkennt man graphische Darstellungen mit der Zeit als Abzissenachse und dem Mengenstrom des Schmiermittelfluids als Ordinate. Gezeigt ist eine Impulsdosierung, Impulsdauer Δt, Impulsabstand a. Die schraffierten Rechteckflächen entsprechen der bei einem Impuls abgegebenen Schmiermittelmenge. Die Impulse sind im Ausführungsbeispiel volumenkonstant. In der Fig. 2a möge das Kettenrad des Kettentriebes mit konstanter Drehzahl n₁ laufen. In der Fig. 2b erkennt man, daß sich beginnend bei t₁ die Drehzahl n₂ des Kettenrades im Sinne einer Vergrößerung geändert hat. Bei t₂ wurde die Drehzahl so groß, daß zur Vermeidung eines Abschleuderns des Schmiermittelfluids das Impulsdosiersystem blockiert wurde. Beginnend mit der Zeit t₃ werden die durch die Blockierung nicht abgegebenen Impulse nachgespeist.

## Patentansprüche

1. Verfahren zum dosierten Schmieren eines Kettentriebes, der zumindest ein Kettenrad aufweist, mit Hilfe eines Apparates für die impulsdosierte Abgabe eines Schmiermittelfluids, welcher Apparat ein Impulsdosiersystem mit Steuereinrichtung aufweist, mit den Merkmalen:
1.1) Das Schmiermittelfluid wird auf die Kette und/oder auf das Kettenrad aufgegeben,
1.2) die Anzahl der Umdrehungen des Kettentriebes pro Sekunde wird gemessen und einem Rechner zugeführt, der auf die Steuereinrichtung für das Impulsdosiersystem arbeitet,
1.3) der Rechner gibt das Impulsdosiersystem nach Maßgabe einer vorgegebenen Anzahl von Umdrehungen frei,
dadurch gekennzeichnet, daß
1.4) der Rechner das Impulsdosiersystem blockiert, wenn die aus der Anzahl n der Umdrehungen des Kettenrades pro Sekunde von dem Rechner abgeleitete, der Zentrifugalkraft am Kettenrad proportionale Größe einen oberen Grenzwert erreicht, wobei der Grenzwert so gewählt wird, daß das Kettenrad in bezug auf das dosiert aufgegebene Schmiermittelfluid abschleuderfrei arbeitet.

2. Verfahren zum dosierten Schmieren eines Kettentriebes, der zumindest ein Kettenrad aufweist, mit Hilfe eines Apparates für die impulsdosierte Abgabe eines Schmiermittelfluids, welcher Apparat ein Impulsdosiersystem mit Steuereinrichtung aufweist, mit den Merkmalen:
2.1) Das Schmiermittel fluid wird auf die Kette und/oder auf das Kettenrad aufgegeben,
2.2) die Winkelgeschwindigkeit des Kettenrades sowie die Anzahl der Umdrehungen des Kettenrades werden gemessen,
2.3) die Meßwerte für die Winkelgeschwindigkeit und für die Anzahl der Umdrehungen des Kettenrades werden einem Rechner zugeführt, der auf die Steuereinrichtung für das Impulsdosiersystem arbeitet,
2.4) der Rechner gibt das Impulsdosiersystem nach Maßgabe einer vorgegebenen Anzahl von Umdrehungen frei,
dadurch gekennzeichnet, daß
2.5) der Rechner das Impulsdosiersystem blockiert ; wenn die Meßwerte für die Winkelgeschwindigkeit einen oberen Grenzwert erreichen, wobei der Grenzwert so gewählt wird, daß das Kettenrad in bezug auf das dosiert aufgegebene Schmiermittelfluid abschleuderfrei arbeitet.

3. Verfahren nach einem der Ansprüche 1 oder 2, wobei über die Programmierung des Rechners die gemäß Merkmal 1.4) bzw. 2.5) blockierten Dosierimpulse nachgespeist werden, wenn der Kettentrieb nach der Blockierung des Impulsdosiersystems unter dem Grenzwert arbeitet.

4. Verfahren nach einem der Ansprüche 1 bis 3, wobei der Apparat für die impulsdosierte Abgabe des Schmiermittelfluids mit volumenkonstanten Impulsen arbeitet.

5. Verfahren nach einem der Ansprüche 1 bis 4, wobei der in den Merkmalen 1.4) bzw. 2.5) angegebene Grenzwert nach Maßgabe der im Arbeitstemperaturbereich niedrigsten Viskosität des Schmiermittelfluids eingestellt wird.

6. Verfahren nach einem der Ansprüche 1 bis 5, wobei der Rechner nach Maßgabe eines aus einer Gruppe von Schmiermittelfluiden unterschiedlicher Viskosität und/oder unterschiedlicher Temperaturabhängigkeit der Viskosität ausgewählten Schmiermittelfluids programmiert wird.

7. Verfahren nach einem der Ansprüche 1 bis 6, wobei das Schmiermittelfluid in Umlaufrichtung des Kettenrades vor diesem und/oder im Auflaufbereich der Kette auf das Kettenrad aufgegeben wird.

8. Verfahren nach einem der Ansprüche 1 bis 6, wobei das Schmiermittelfluid auf die vom Kettenrad ablaufende Kette aufgegeben wird.

## Claims

1. A method for the metered lubrication of a chain drive which comprises at least one chain wheel, by means of an apparatus for the pulsed, metered delivery of a lubricant fluid. which apparatus comprises a pulsed metering system with a controller, having the features:
1.1) the lubricant fluid is fed on to the chain and/or on to the chain wheel.
1.2) the number of revolutions of the chain drive per second is measured and is fed to a computer which acts on the controller for the pulsed metering system,
1.3) the computer enables the pulsed metering system according to a predetermined number of revolutions.
characterised in that
1.4) the computer disables the pulsed metering system when the quantity which is derived by the computer from the number n of revolutions of the chain wheel per second and which is proportional to the centrifugal force on the chain wheel reaches an upper limiting value, wherein the limiting value is selected so that the chain wheel operates free from throw-off with respect to the metered lubricant fluid which is supplied.

2. A method for the metered lubrication of a chain drive which comprises at least one chain wheel, by means of an apparatus for the pulsed, metered delivery of a lubricant fluid, which apparatus comprises a pulsed metering system with a controller, having the features:
2.1) the lubricant fluid is fed on to the chain and/or on to the chain wheel,
2.2) the angular velocity of the chain wheel, as well as the number of revolutions of the chain drive, are measured,
2.3) the measured values of the angular velocity and of the number of revolutions of the chain drive are fed to a computer which acts on the controller for the pulsed metering system.
2.4) the computer enables the pulsed metering system according to a predetermined number of revolutions,
characterised in that
2.5) the computer disables the pulsed metering system when the measured values of the angular velocity reach an upper limiting value, wherein the limiting value is selected so that the chain wheel operates free from throw-off with respect to the metered lubricant fluid which is supplied.

3. A method according to either one of claims 1 or 2, wherein the metering pulses which are disabled according to features 1.4) or 2.5) are re-supplied via the programming of the computer if the chain drive operates below the limiting value after the disabling of the pulsed metering system.

4. A method according to any one of claims 1 to 3, wherein the apparatus for the pulsed, metered delivery of the lubricant fluid operates with pulses of constant volume.

5. A method according to any one of claims 1 to 4, wherein the limiting value given in features 1.4) or 2.5) is set according to the lowest viscosity of the lubricant fluid within the operating temperature range.

6. A method according to any one of claims 1 to 5, wherein the computer is programmed corresponding to a lubricant fluid which is selected from a group comprising lubricant fluids of different viscosities and/or with different dependencies of viscosity on temperature.

7. A method according to any one of claims 1 to 6, wherein the lubricant fluid is fed on to the chain wheel in front of the chain wheel in the direction of rotation thereof and/or in the region of run-on of the chain on to the chain wheel.

8. A method according to any one of claims 1 to 6. wherein the lubricant fluid is fed on to the chain as it runs off the chain wheel.

## Revendications

1. Procédé de lubrification dosée d'une transmission à chaîne qui comporte au moins une roue dentée, à l'aide d'un appareil pour la distribution à dosage par impulsions d'un fluide lubrifiant, lequel appareil comporte un système de dosage par impulsions avec dispositif de commande, présentant les caractéristiques suivantes:
1.1) le fluide lubrifiant est délivré sur la chaîne et/ou sur la roue dentée,
1.2) le nombre de rotations de la transmission à chaîne par seconde est mesuré et envoyé à un ordinateur qui fonctionne sur le dispositif de commande du système de dosage par impulsions,
1.3) l'ordinateur actionne le système de dosage par impulsions en fonction d'un nombre donné de rotations,
caractérisé en ce que
1.4) l'ordinateur bloque le système de dosage par impulsions lorsque la grandeur proportionnelle à la force centrifuge sur la roue dentée et dérivée par l'ordinateur du nombre n de rotations de la roue dentée par seconde, atteint une valeur limite supérieure, la valeur limite étant choisie de manière que la roue dentée fonctionne sans projections en ce qui concerne le fluide lubrifiant distribué de manière dosée.

2. Procédé de lubrification dosée d'une transmission à chaîne qui comporte au moins une roue dentée, à l'aide d'un appareil pour la distribution à dosage par impulsions d'un fluide lubrifiant, lequel appareil comporte un système de dosage par impulsions avec dispositif de commande, présentant les caractéristiques suivantes:
2.1) le fluide lubrifiant est délivré sur la chaîne et/ou sur la roue dentée,
2.2) la vitesse angulaire de la roue dentée ainsi que le nombre de rotations de la roue dentée sont mesurés,
2.3) les valeurs mesurées de la vitesse angulaire et du nombre de rotations de la roue dentée sont envoyées à un ordinateur qui fonctionne sur le dispositif de commande du système de dosage par impulsions,
2.4) l'ordinateur actionne le système de dosage par impulsions en fonction d'un nombre donné de rotations,
caractérisé en ce que
2.5) l'ordinateur bloque le système de dosage par impulsions lorsque les valeurs mesurées de la vitesse angulaire atteignent une valeur limite supérieure, la valeur limite étant choisie de manière que la roue dentée fonctionne sans projections en ce qui concerne le fluide lubrifiant distribué de manière dosée.

3. Procédé selon l'une des revendications 1 ou 2, dans lequel, par l'intermédiaire de la programmation de l'ordinateur, les impulsions de dosage bloquées selon la caractéristique 1.4) respectivement 2.5), sont réalimentées lorsque la transmission à chaîne fonctionne au-dessous de la valeur limite, après le blocage du système de dosage par impulsions.

4. Procédé selon l'une des revendications 1 à 3, dans lequel l'appareil de distribution à dosage par impulsions du fluide lubrifiant fonctionne avec des impulsions à volume constant.

5. Procédé selon l'une des revendications 1 à 4, dans lequel la valeur limite indiquée dans les caractéristiques 1.4) respectivement 2.5) est réglée en fonction de la viscosité la plus basse du fluide lubrifiant dans la plage de températures de travail.

6. Procédé selon l'une des revendications 1 à 5, dans lequel l'ordinateur est programmé en fonction d'un fluide lubrifiant sélectionné dans un groupe de fluides lubrifiants de viscosités différentes et/ou dont la viscosité varie différemment suivant la température.

7. Procédé selon l'une des revendications 1 à 6, dans lequel le fluide lubrifiant est délivré devant la roue dentée dans le sens de rotation et/ou dans la zone d'arrivée de la chaîne sur la roue dentée.

8. Procédé selon l'une des revendications 1 à 6, dans lequel le fluide lubrifiant est délivré sur la chaîne sortant de la roue dentée.
